# EUROPEAN PATENT APPLICATION

(11) **EP 1 982 624 A2**
(43) Date of publication of application: **22.10.2008**
(21) Application number: 08380113.4
(22) Date of filing: 14.04.2008
(51) Int. Cl.: A47J 43/07

(54) **Cutting implement and working head for an electric stick blender**

(30) Priority: 19.04.2007 ES 200701048
(71) Applicant: Electrodomesticos Taurus S.L., 25790 Oliana (Lleida) (ES)
(72) Inventor: Trench Roca, Lluis, 25790 Oliana (Lleida) (ES); Codina Vilana, Antoni, 25790 Oliana (Lleida) (ES); Alet Vidal, Josep, 25790 Oliana (Lleida) (ES)
(74) Representative: Gislon, Gabriele

(57) **Abstract**

The invention relates to a cutting implement and to a working head for an electric stick blender. The cutting implement comprises a central region (1) in which a fixing configuration (2) to be joined to a first end (25a) of a working shaft (25) is defined, and blades (3) extending from the periphery of said central region (1). Each blade (3) is provided with a cutting edge (4) at a leading edge. The blades (3) are all inclined towards one and the same first side of the central region (1) opposite a second side of the central region (1) where said working shaft (25) is joined. The working head comprises a tubular body ending in a hood having a front mouth, and the cutting implement is arranged to rotate inside the hood with all the blades (3) oriented in diverging directions towards said front mouth of the hood.

## Description

### Technical Field

The present invention relates to a cutting implement applicable to a working head of an electric stick blender, and it also relates to a working head equipped with one such cutting implement for an electric stick blender with a detachable head.

### Background of the Invention

A type of electric blenders called "stick blenders" is well known, consisting of a main body configured to be gripped with one hand and in which an electric drive motor is housed, and a working head in the form of a stick or tubular body extending downwardly from the main body. At the end of the tubular body distal from the main body a hood is formed with a front mouth and side windows, and a cutting implement fixed to a first end of a working shaft rotatably arranged inside the tubular body and operatively connected to be actuated by said drive motor is mounted in a work space defined by at least part of the hollow interior of said hood. The working head is used to crush, beat or mix foods inside a vessel, the blender being held and managed with one hand. It is also known that the working head can be decoupled from the main body to facilitate its cleaning without the risk of deterioration of the motor and other electric components housed in the main body.

In this type of electric stick blenders, the cutting implement comprises a central region in which a fixing configuration is defined to be joined to the first end of a working shaft, and blades extending from the periphery of said central region. Each of the blades of the cutting implement is provided with a cutting edge at a leading edge.

A classic cutting implement for an electric stick blender, an example of which is described in patent EP-A-0724857, comprises only two blades extending from opposing regions of the central region, one of the blades being inclined towards a back wall of the hood, i.e. towards the side where the working shaft is located, and the other blade being inclined towards the mouth of the hood, i.e. towards the side opposite the working shaft. The inclination angle of the two blades is relatively small in relation to a plane perpendicular to the central axis of the working shaft, i.e. to the axis of rotation of the cutting implement. This type of cutting implement has the drawback of offering a poor capacity for penetrating the foods to be crushed in the vessel, especially when the foods are solid, for example meats, fruits, raw vegetables or garden produce, etc., since only one of the blades, namely the blade that is inclined a small angle towards the mouth of the hood, initially makes contact with the foods when the working head is introduced into the vessel. This obliges exerting considerable force towards the inside of the vessel with the hand that is handling the blender and using a considerable amount of time to process solid foods.

Patents ES-A-2005071, GB-A-2424844 and JP-A-2005052512 describe different examples of cutting implements for a stick blender in which, in addition to the classic two blades inclined a slight angle in opposite directions, the cutting implement includes small flanges or flaps aimed towards the mouth of the hood. These small flanges or flaps offer certain aid in penetrating solid foods with the cutting implement, but they are still insufficient for quickly processing solid foods.

In addition, patent GB-A-1050352, now belonging to the public domain, describes an electric stick blender with a detachable working head in which the working shaft can be moved against the force of a spring to remove the cutting implement from the work space inside the hood for the purpose of aiding in cleaning the head.

### Disclosure of the Invention

According to a first aspect, the present invention provides a cutting implement for an electric stick blender. The cutting implement is of the type comprising a central region in which a fixing configuration is defined to be joined to a first end of a working shaft, and blades extending from the periphery of said central region, each of said blades being provided with a cutting edge at a leading edge. The cutting implement according to the present invention is characterized in that the mentioned blades are all inclined towards one and the same first side of the central region opposite a second side of the central region where said working shaft is joined in an operating position.

Furthermore, the mentioned cutting edge of each of the blades defines, upon rotating with the working shaft, a figure of revolution substantially inscribed into an ideal cone coaxial with the working shaft and having a cone angle of 5° to 45° measured between the axis and a generatrix of said ideal cone. In other words, the inclination of the blades is from 45° to 85° with respect to an ideal plane perpendicular to the central axis of the working shaft, or axis of rotation of the cutting implement. This cone angle is preferably comprised between 10° and 20°, or in other words, the inclination of the blades in relation to said ideal plane perpendicular to the central axis of the working shaft is from 70° to 80°. Therefore when the working head is introduced in a vessel containing foods, the cutting edges of all the blades come into contact with the foods well before the central region of the cutting implement, and according to the pronounced inclination of the blades, the foods, even when they are solid foods, can be easily and quickly processed with little effort.

To soften the impact of the cutting edges with the foods to be processed, the cutting edge of one or more of the blades has a distal end in relation to the central region that is ahead of or behind a corresponding proximal end. In other words, an ideal line joining distal and proximal ends of the cutting edge in relation to the central region forms a cutting angle in relation to a generatrix of the mentioned ideal cone or in relation to an ideal plane containing the axis and a generatrix of the ideal cone. This cutting angle is preferably from 0° to 45° and more preferably from 20° to 30°.

For the purpose of promoting a suitable stirring of the processed foods in the vessel, one or more of the blades has an inclined surface forming a helix angle with an ideal line tangent to a circle described by a mid-point of the blade upon rotating.

All the blades can be substantially equal and symmetrical in relation to the central axis of the working shaft or can be of different sizes and/or have different cone, cutting and helix angles although in all cases, all the blades are inclined in diverging directions towards one and the same side of the central region. Furthermore, in some embodiments, the cutting edge of one or more of the blades is prolonged into an auxiliary cutting edge formed in a portion of an edge of the central region.

The cutting implement according to the present invention can be formed from a single metal sheet body defining the central region with the fixing configuration and the blades. This construction is suitable for forming a cutting implement with any number of blades, although it preferably has three or more blades. However, for the purpose of optimizing the material, a cutting implement of the present invention can be constructed with four blades from two elongated sheet bodies, each of which defines a partial central region in which a corresponding partial fixing configuration is formed and from which two of the opposing blades are extended, said partial central regions being overlaid to form said central region, such that the two partial fixing configurations are aligned to form the fixing configuration of the cutting implement. The two sheet bodies can be fixed to one another, for example, by welding or adhesive, or can be jointly fixed to the first end of the working shaft by a screw or other suitable fixing element. To this respect it must be mentioned that the fixing configuration, or each partial fixing configuration, comprises an opening in the central region of the cutting implement, said opening defining a non-circular contour with no sharp vertices where a conjugated configuration formed in the fixing screw, between a head and a stem thereof, is fitted. The absence of sharp vertices reduces the presence of stress concentrators in the central region and contributes to prevent the occurrence of cracks in the cutting implement which otherwise will occur from the central opening.

According to a second aspect, the present invention provides a working head for an electric stick blender, comprising a tubular body having at a first end a hollow configuration defining a hood with a front mouth and side windows. A back wall is arranged inside said hood, and between said back wall, a portion of the hood, and its front mouth a work space is defined with which said side windows are communicated. A working shaft which can be actuated by a drive motor is rotatably mounted inside said tubular body. This working shaft has a first end inside said work space, and a cutting implement arranged to rotate in the work space is fixed to said first end of the working shaft. The working head of this second aspect of the present invention is characterized in that said cutting implement is a cutting implement according to the first aspect of the present invention, and in that in an operating position, the mentioned central region of the cutting implement is adjacent to the back wall of the hood, and all the blades of the cutting implement are oriented in diverging directions towards said front mouth of the hood.

With this construction, when the working head is introduced in a vessel to process foods, the cutting edges of all the blades in movement immediately come into contract with the foods contained in the vessel before the central region, thereby aiding in the crushing and penetration of the head even with solid foods.

In said operating position, the blades of the cutting implement preferably do not project from the front mouth of the hood and each of the blades has at least one portion comprised between its distal and proximal ends which upon rotating passes by opposite said side windows of the hood to aid, in combination with the helix angle and the rotating direction of the blades of the working implement, in circulating the foods from inside to outside the work space through the side windows and from outside to inside the work space through the front mouth.

According to an embodiment, arranged at a second end of the tubular body of the working head, opposite the first end where the hood is located, there is a coupling configuration for coupling to a main body in which a drive shaft operatively connected to said drive motor is housed. The working shaft has a second end, opposite said first end connected to the cutting implement, configured and arranged to couple with the mentioned drive shaft when said coupling configuration of the working head is coupled to the mentioned main body. Therefore the working head is detachable from the main body, for example, to facilitate the cleaning or to be replaced with other attachments. The working shaft is optionally mounted in the tubular body such that it can slide between said operating position, in which the central region of the cutting implement is adjacent to the back wall of the hood, and a cleaning position, in which the central region of the cutting implement is spaced from the back wall of the hood by a sufficient distance to facilitate the cleaning between both. An elastic element, such as a coil spring, is arranged to push the working shaft towards the operating position. When the working head is detached from the main body, the mentioned second end of the working shaft can be pressed against the force of said elastic element to move the working shaft towards the cleaning position.

### Brief Description of the Drawings

The foregoing and other features and advantages will be more fully understood from the following detailed description of several embodiments in relation to the attached drawings, in which:
Figure 1 is a perspective view of a cutting implement for an electric stick blender according to a first embodiment of the first aspect of the present invention;
Figure 2 is a side view of the cutting implement of Figure 1;
Figures 3 and 4 are bottom and top views, respectively, of the cutting implement of Figure 1;
Figures 5 and 6 are bottom and top views, respectively, of a cutting implement according to a second embodiment of the first aspect of the present invention;
Figure 7 is a perspective view of a cutting implement according to a third embodiment of the first aspect of the present invention;
Figures 8 and 9 are bottom and top views, respectively, of the cutting implement of Figure 7;
Figure 10 is a side view of a cutting implement according to a fourth embodiment of the first aspect of the present invention formed from two sheet bodies;
Figures 11 and 12 are bottom views of the two sheet bodies which together form the cutting implement of Figure 10;
Figure 13 is a bottom view of the cutting implement of Figure 10 formed from the two sheet bodies of Figures 11 and 12;
Figure 14 is a cross-sectional view of a working head for an electric stick blender according to an embodiment of the second aspect of the present invention, in an operating position; and
Figure 15 is a cross-sectional view of the working head of Figure 14 in a cleaning position.

### Detailed Description of Exemplary Embodiments

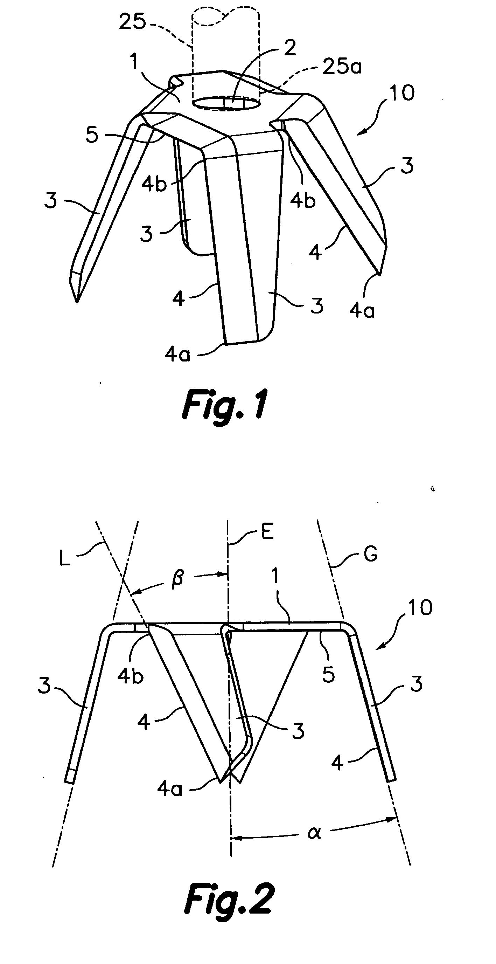

Referring first to Figures 1 to 4, there is show a cutting implement for an electric stick blender according to a first embodiment, which is formed from a single sheet body 10 defining a central region 1, in which a fixing configuration 2 is defined to be joined to a first end 25a of a working shaft 25 (shown by dotted lines in Figure 1), and blades 3 extending from the periphery of said central region 1. The cutting implement is provided to rotate together with said working shaft 25, and each of said blades 3 has a chamfer defining a cutting edge 4 at a leading edge in relation to the rotating direction of the cutting implement. The blades 3 are all inclined towards one and the same first side of the central region 1, whereas said working shaft 25 is joined, in an operating position, to a second side of the central region 1 opposite said first side. Therefore, all the blades 3 are oriented and aimed towards a first side of the central region opposite the working shaft 25.

The blades 3 are oriented such that the mentioned cutting edge 4 of each of them defines, upon rotating with the working shaft 25, a figure of revolution substantially inscribed into an ideal cone coaxial with the working shaft 25. This ideal cone has a cone angle α of 5° to 45° measured between the central axis E and a generatrix G of said ideal cone, as depicted in Figure 2. The mentioned cone angle α is preferably from 10° to 20°. Described in another way, from the mentioned sheet body 10, which initially has a planar star shape, the blades 3 have been bent towards the first side of the central region 1 at an angle of 45° to 85°, and more preferably at an angle of 70° to 80° in relation to the central region.

The cutting edge 4 of one or more of the blades 3 has a distal end 4a in relation to the central region 1 that is behind a corresponding proximal end 4b, in relation to the rotating direction of the cutting implement. The purpose of this is to soften the impact of the cutting edge 4 with the foods upon rotating the cutting implement. As depicted in Figure 2, an ideal line L joining the mentioned distal and proximal ends 4a, 4b of the cutting edge 4 preferably forms a cutting angle β of 0° to 45°, and more preferably of 20° to 30°, in relation to a generatrix of said ideal cone. In Figure 2, the generatrix of the ideal cone taken as a reference is overlaid and coincides with the central axis E. Therefore, all the blades 3 of the cutting implement are preferably inclined in diverging directions from said periphery of the central region 1 and towards the first side of the central region 1.

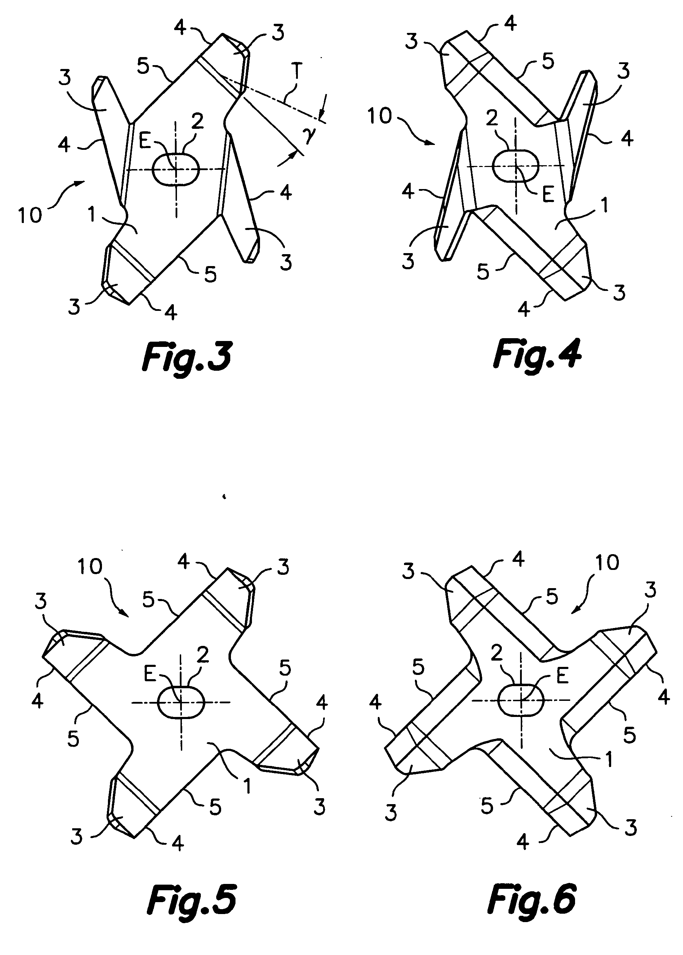

As is shown in Figure 3, one or more of the blades 3 has an inclined surface forming a helix angle γ which can approximately be defined as the angle between said inclined surface and an ideal line T tangent to a circle described by a mid-point of the blade 3 upon rotating. This helix angle γ aids in stirring the processed foods in the vessel.

For reasons of easy manufacture, in the illustrated embodiments the central region 1 of the cutting implement is substantially planar and perpendicular to a central axis E of the working shaft 25, and all the blades 3 are likewise substantially planar. Furthermore, the cutting edges 4 of all the blades 3 are substantially rectilinear for the same reasons. However, it is within the scope of the present invention that the central region and/or the blades, or some of the blades, are arched or dished and that the cutting edges, or some of the cutting edges, are curved. In such case, the geometric definitions of the blades and cutting edges provided above must be considered by assimilation to idealized shapes.

Even though the number of blades 3 in the cutting implement of the present invention is not limited, the cutting implement preferably includes three or more blades 3. In the first embodiment shown in Figures 1 to 4, the cutting implement comprises four blades 3, distributed in two pairs of blades with different features. The blades 3 of each pair are equal and symmetrical in relation to the central axis E, and extend from diametrically opposed points of the central region 1. The blades 3 of one of the pairs are closer to the central axis E than the blades 3 of the other pair, and all the blades 3 meet the conditions for the cone angle α, cutting angle β and helix angle γ described above. The cutting edge 4 of the blades 3 of the pair farthest from the central axis E is prolonged into an auxiliary cutting edge 5 formed in a contiguous portion of an edge of the central region 1, whereby increasing the cutting capacity of the cutting implement.

As can be best seen in Figures 3 and 4, the mentioned fixing configuration 2 comprises an opening in the central region 1 of the cutting implement, suitable for the passage of a stem of a fixing screw (not shown). As conventional, the working shaft 25 has formed in its first end 25a an internally screw threaded axial hole in which the mentioned threaded stem of the fixing screw is screwed, whereas a head of the fixing screw is pressed against an area of the first side of the central region 1 around the fixing configuration 2 of the cutting implement. To prevent relative rotation between the working shaft 25 and the cutting implement, the opening of the fixing configuration 2 defines a non-circular contour in which a conjugated configuration formed between the head and the stem of the fixing screw is fitted. Advantageously, the contour of the opening of the fixing configuration 2 has no sharp vertices to prevent stress concentrators in the central region 1 of the cutting implement. In the illustrated embodiments, the contour of the opening of the fixing configuration 2 is formed by two opposing semicircular end sections connected by two opposing rectilinear sections tangent to the semicircular sections, although other configurations are within the scope of the present invention provided they have no sharp vertices.

Figures 5 and 6 show a second embodiment of the cutting implement of the present invention similar to the first embodiment described above in relation to Figures 1 to 4 except that here the cutting implement includes four blades 3, which are all substantially equal and symmetrical in relation to the central axis E of the working shaft 25. The four blades 3 are inclined towards the first side of the central region 1 and distributed at angular intervals of 90° around the central axis E. The cutting edges 4 of all the blades 3 are prolonged into corresponding auxiliary cutting edges 5 formed in contiguous portions of the edge of the central region 1. The four blades 3 meet the conditions for the cone angle α, cutting angle β and helix angle γ described above and the fixing configuration 2 is identical to that of the first embodiment. Obviously one of the blades could be different from the others or the four blades could be different from one another without departing from the scope of the present invention provided that all blades 3 were inclined towards the first side of the central region 1.

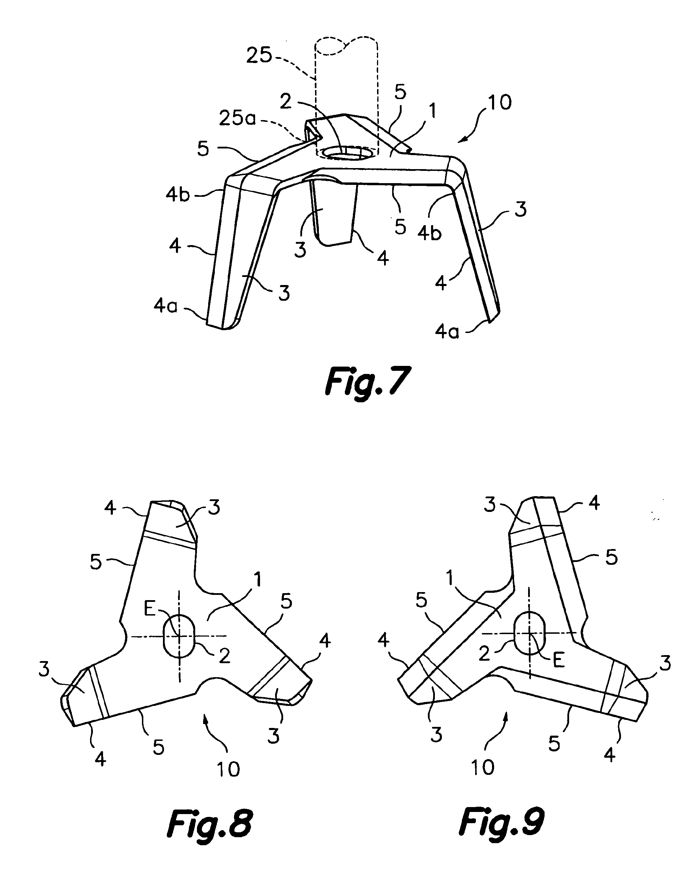

Figures 7 to 9 show a third embodiment of the cutting implement of the present invention similar to the first embodiment described above in relation to Figures 1 to 4, except in that here the cutting implement includes three blades 3 substantially equal and symmetrical in relation to the central axis E. The three blades 3 are inclined towards the first side of the central region 1 and distributed at angular intervals of 120° around the central axis E. The cutting edges 4 of all the blades 3 are prolonged into corresponding auxiliary cutting edges 5 formed in contiguous portions of the edge of the central region 1. The three blades 3 meet the conditions for the cone angle α, cutting angle β and helix angle γ described above, and the fixing configuration 2 is identical to that of the first embodiment. Obviously one of the blades could be different from the others or the three blades could be different from one another without departing from the scope of the present invention provided that the all blades 3 were inclined towards the first side of the central region 1.

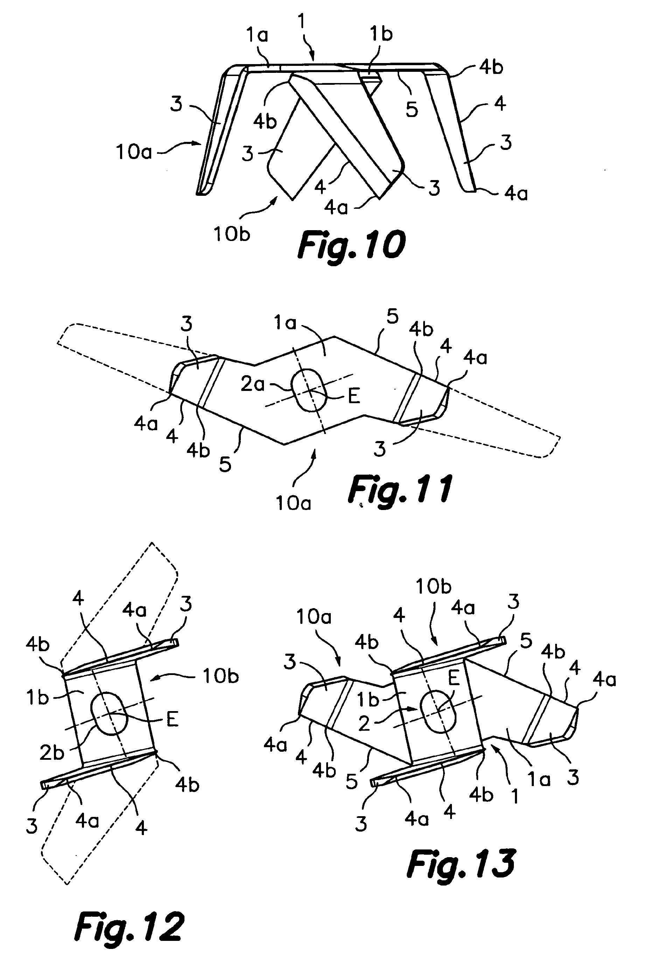

A fourth embodiment of the cutting implement of the present invention is described in relation to Figures 10 to 13. The fourth embodiment comprises four of the blades 3 and is formed from first and second elongated sheet bodies 10a, 10b, shown separately in Figures 11 and 12. The mentioned first sheet body 10a (Figure 11) comprises a first partial central region 1a in which a corresponding first partial fixing configuration 2a is formed, and two of the four blades 3 extend from opposing points of said first partial central region 1a. The mentioned second sheet body 10b (Figure 12) comprises a second partial central region 1b in which a corresponding second partial fixing configuration 2b is formed, and the other two of the four blades 3 extend from opposing points of said second partial central region 1b.

Figure 13 shows the first and second sheet bodies 10a, 10b with their first and second partial central regions 1a, 1b overlaid to form said central region 1 of the cutting implement and with said first and second partial fixing configurations 2a, 2b aligned to form said fixing configuration 2 of the cutting implement. The four blades 3 meet the conditions for the cone angle α, cutting angle β and helix angle γ described above. Furthermore, each of the first and second partial fixing configurations 2 is identical to the fixing configuration 2 of the first embodiment, such that when they are aligned, they behave as a single fixing configuration 2 defining an opening with a non-circular contour. Here, when the cutting implement is fixed to the first end 25a of the working shaft 25, the conjugated configuration formed between the head and the stem of the fixing screw (not shown) is inserted in the first and second partial fixing configurations 2 and thereby preventing any relative movement between the cutting implement and the working shaft 25 and between the first and second sheet bodies 10a, 10b. The first and second sheet bodies 10a, 10b can optionally be fixed to one another.

The advantage of constructing the cutting implement from two separate sheet bodies 10a, 10b is that when each of the first and second sheet bodies 10a, 10b is in a planar condition (shown by dotted lines in Figures 11 and 12) prior to the bending of the blades 3, it has an elongated shape which favors savings in material when the first and second sheet bodies 10a, 10b are obtained by die-cutting a piece of metal sheet, which would not occur if the central region and the four blades 3 were constructed from a single star-shaped sheet body.

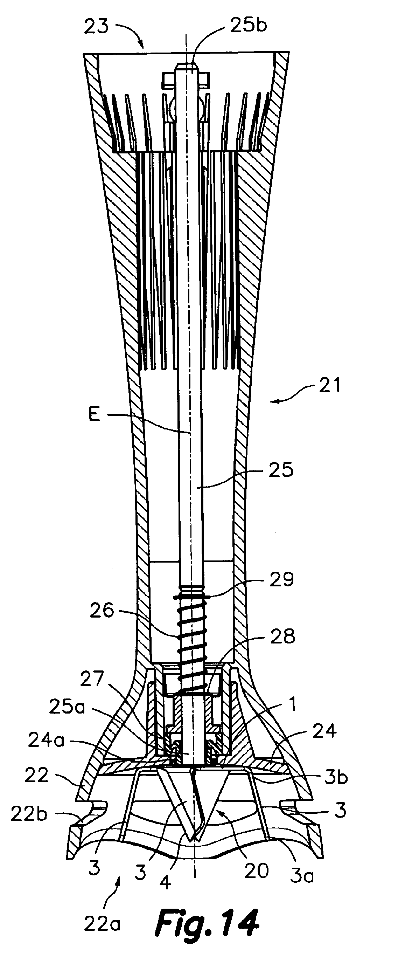

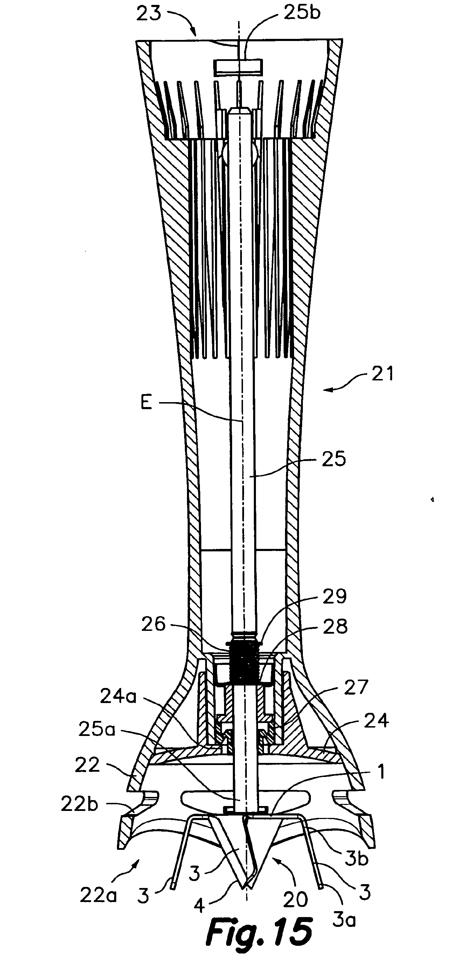

Figures 14 and 15 describe a working head for an electric stick blender according to an embodiment of the second aspect of the present invention, which comprises a tubular body 21 having at a first end, or lower end, a hollow configuration defining a hood 22 with a front mouth 22a and side windows 22b, and in a second end, or upper end opposite said first end, a coupling configuration 23 adapted to allow coupling the tubular body 21 to a main body (not shown) in which a drive shaft operatively connected to an electric drive motor is housed. This main body is configured to be gripped with a hand and comprises one or more controls to activate said electric motor.

A part providing a back wall 24 for the hood 22 opposite said front mouth is fixed inside said hood 22. Therefore, a work space wherein a cutting implement 20 is housed is defined between said back wall 24, a portion of the hood 22, and the front mouth 22a. The mentioned side windows 22b of the hood 22 are communicated with said work space. A working shaft 25 able to be actuated by said electric drive motor is rotatably mounted inside the tubular body 21. The mentioned working shaft 25 has a first end 25a passed through an opening of the back wall 24 to project inside said work space and a second end 25b, opposite said first end 25a, which is configured and arranged to couple with said drive shaft when the coupling configuration 23 of the tubular body 21 is coupled to the mentioned main body. The mentioned cutting implement 20 is fixed to said first end 25a of the working shaft 25 and arranged to rotate in the work space. A gasket 27 is arranged to assure tightness between the opening 24a of the back wall 24 and the working shaft 25.

The cutting implement 20 shown in the embodiment of Figures 14 and 15 is identical to the cutting implement of the first embodiment of the first aspect of the present invention shown in Figures 1 to 4, although it could be a cutting implement according to any other of the embodiments shown and described or another cutting implement which meets the condition of having all the blades 3 inclined towards one and the same first side of the central region 1 opposite the working shaft 25 in an operating position. In any case, when the cutting implement 20 is in an operating position (Figure 14) inside the work space of the hood 22, the central region 1 of the cutting implement 20 is adjacent to the back wall 24 of the hood 22, and all the blades 3 of the cutting implement 20 are oriented in diverging directions towards said front mouth 22a of the hood 22.

In this operating position shown in Figure 14, there is minimum distance between the central region 1 of the cutting implement 20 and the back wall 24 of the hood 22 that is sufficient for the cutting implement 20 not to make contact with the back wall 24. The central region 1 of the cutting implement 20 is substantially planar and said back wall has a slightly dished concave surface opposite the central region 1 of the cutting implement 20. Furthermore, in the operating position the blades 3 of the cutting implement do not project from the front mouth 22a of the hood 22. Each of the blades 3 has a distal end 3a and a proximal end 3b in relation to the central region 1, and a portion of each blade 3 comprised between its distal and proximal ends 3a, 3b passes by, upon rotating, opposite said side windows 22b of the hood 22. The tubular body 21 is preferably configured such that a portion of the hood 22 comprised between the front mouth 22a and the back wall 24 is substantially parallel to said ideal cone into which the set of the blades 3 of the cutting implement 20 is inscribed.

The working shaft 25 is mounted inside the tubular body 21 such that it can slide axially between the mentioned operating position, in which the central region 1 of the cutting implement 20 is adjacent to the back wall 24 of the work space inside the hood 22, and a cleaning position (Figure 15), in which the central region 1 of the cutting implement 20 is spaced from the back wall 24 of the hood 22 sufficient distance to facilitate the cleaning of the respective opposing surfaces and the space between both. Arranged around the working shaft 25 there is an elastic element 26 in the form of a coil spring under compression having a first end, or lower end, in contact with a first washer 28 fixed in relation to the tubular body 21 and a second end, or upper end, in contact with a second washer 29 fixed in relation to the working shaft 25. Therefore, the mentioned elastic element 26 acts to permanently push the working shaft 25 towards the operating position (Figure 14). When the working head is decoupled from the main body (not shown) of the electric stick blender, the mentioned second end 25b of the working shaft 25 can be pressed against the force of said elastic element 26 to move the working shaft 25 towards said cleaning position (Figure 15) such that the cutting implement is dislodged from the work space and projects out from the hood 22, providing the mentioned separation between the central region 1 of the cutting implement and the back wall 24 of the work space.

One skilled in the art will be able to make modifications and variations based on the embodiments shown and described without departing from the scope of the present invention as it is defined is defined in the attached claims.

## Claims

1. A cutting implement for an electric stick blender, of the type comprising a central region (1) in which a fixing configuration (2) is defined to be joined to a first end (25a) of a working shaft (25), and blades (3) extending from the periphery of said central region (1), each of said blades (3) being provided with a cutting edge (4) in a leading edge, **characterized in that** the mentioned blades (3) are all inclined towards one and the same first side of the central region (1) opposite a second side of the central region (1) where said working shaft (25) is joined in an operating position.

2. A cutting implement according to claim 1, **characterized in that** said cutting edge (4) of each of the blades (3) defines, upon rotating with the working shaft (25), a figure of revolution substantially inscribed into an ideal cone coaxial with the working shaft (25) and having a cone angle (α) of 5° to 45° measured between the axis and a generatrix of said ideal cone.

3. A cutting implement according to claim 1 or 2, **characterized in that** said cutting edge (4) of at least one of the blades (3) has a distal end (4a) in relation to the central region (1) that is ahead of or behind a corresponding proximal end (4b), and **in that** an ideal line joining distal and proximal ends (4a, 4b) of the cutting edge (4) in relation to the central region (1) forms a cutting angle (β) of 0° to 45° in relation to a generatrix of said ideal cone.

4. A cutting implement according to claim 1 or 2, **characterized in that** all the mentioned blades (3) are inclined in diverging directions from said periphery of the central region (1).

5. A cutting implement according to claim 1 or 2, **characterized in that** the cutting edge (4) of at least one of the blades (3) is prolonged into an auxiliary cutting edge (5) formed in a portion of an edge of the central region (1).

6. A cutting implement according to claim 1 or 2, **characterized in that** at least one of the blades (3) has an inclined surface forming a helix angle (γ) with an ideal line tangent to a circle described by a mid-point of the blade (3) upon rotating.

7. A cutting implement according to claim 1 or 2, **characterized in that** said fixing configuration (2) comprises an opening in the central region (1), wherein said opening defines a non-circular contour having no sharp vertices, said non-circular contour being formed by two opposing semicircular end sections connected by two opposing rectilinear sections which are tangent to said semicircular sections.

8. A cutting implement according to any one of the previous claims, **characterized in that** it is formed from a single sheet body (10) defining the central region (1), said fixing configuration (2) and the blades (3).

9. A cutting implement according to claim 8, **characterized in that** it comprises at least three of said blades (3).

10. A cutting implement according to any one of claims 1 to 7, **characterized in that** it comprises four of said blades (3) and is formed from two elongated sheet bodies (10a, 10b), each of which comprises a partial central region (1a, 1b) in which a corresponding partial fixing configuration (2a, 2b) is formed and from which two of the opposing blades (3) extend, said partial central regions (1a, 1b) being overlaid to form said central region (1) with said partial fixing configurations (2a, 2b) aligned to form said fixing configuration (2).

11. A working head for an electric stick blender, of the type comprising:
a tubular body (21) having at a first end a hollow configuration defining a hood (22) with a front mouth (22a) and side windows (22b);
a back wall (24) inside said hood (22), a work space being defined between said back wall (24), at least one portion of the hood (22), and its front mouth (22a), said side windows (22b) being communicated with said work space;
a working shaft (25) rotatably mounted inside said tubular body (21) and able to be actuated by a drive motor, said working shaft (25) having a first end (25a) inside said work space; and
a cutting implement (20) fixed to said first end (25a) of the working shaft (25) and arranged to rotate in the work space,
**characterized in that** said cutting implement (20) is a cutting implement according to any one of the previous claims, wherein, in an operating position, said central region (1) of the cutting implement (20) is adjacent to the back wall (24) of the hood (22), and all the blades (3) of the cutting implement (20) are oriented towards said front mouth (22a) of the hood (22).

12. A head according to claim 11, **characterized in that**, in said operating position, there is a minimum distance between the central region (1) of the cutting implement (20) and the back wall (24) of the hood (22) sufficient for the cutting implement (20) not to make contact with the back wall (24), wherein the central region (1) of the cutting implement (20) is substantially planar and said back wall has a slightly dished concave surface opposite the central region (1) of the cutting implement (20).

13. A head according to claim 11, **characterized in that**, in said operating position, the blades (3) of the cutting implement do not project from the front mouth (22a) of the hood (22) and each of the blades (3) has at least one portion comprised between its distal and proximal ends (3a, 3b) which, upon rotating, passes by opposite said side windows (22b) of the hood (22).

14. A head according to claim 11, **characterized in that** said tubular body (21) has, at a second end opposite said first end, a coupling configuration (23) for coupling to a main body in which a drive shaft operatively connected to said drive motor is housed, and said working shaft (25) has a second end (25b), opposite said first end (25a), configured and arranged to couple with said drive shaft when said coupling configuration (23) is coupled to the mentioned main body.

15. A head according to claim 11, **characterized in that** the working shaft (25) is mounted in the tubular body (21) such that it can slide between said operating position, in which the central region (1) of the cutting implement (20) is adjacent to the back wall (24) of the hood (22), and a cleaning position, in which the central region (1) of the cutting implement (20) is spaced from the back wall (24) of the hood (22) by a sufficient distance to facilitate the cleaning between both, wherein an elastic element (26) is arranged to push the working shaft (25) towards the operating position and wherein said second end (25b) of the working shaft (25) can be pressed against the force of said elastic element (26) to move the working shaft (25) towards said cleaning position.
